# EUROPEAN PATENT APPLICATION

(11) **EP 4 793 015 A1**
(43) Date of publication of application: **19.08.2026**
(21) Application number: 24755043.7
(22) Date of filing: 26.06.2024
(51) Int. Cl.: B29C 33/38, B29C 33/40, B33Y 10/00, B33Y 50/00, B33Y 80/00

(54) **METHOD FOR MANUFACTURING MOULDS FOR OBTAINING PARAFFIN BLOCKS FOR TMA**

(30) Priority: 11.10.2023 ES 202330849
(71) Applicant: Fundació Institut d'Investigació Sanitària Pere Virgili (IISPV), 43003 Tarragona (ES)
(72) Inventor: LOPEZ PABLO, Carlos, 43003 Tarragona (Tarragona) (ES); SAURAS COLÓN, Esther, 43003 Tarragona (Tarragona) (ES); FERRI MARZO, Rosendo, 43003 Tarragona (Tarragona) (ES); BESALDUCH PIÑOL, Francisco José, 43003 Tarragona (Tarragona) (ES)
(74) Representative: Ungria López, Javier
(86) International application number: PCT/ES2024/070401
(87) International publication number: WO 2025/078703

(57) **Abstract**

A method for manufacturing moulds for obtaining paraffin blocks for TMA comprising at least the steps of: a) obtaining a base mould by means of 3D printing where said base mould comprises a certain number of first holes, forming an array; b) filling the base mould with a mixture, at room temperature, of silicone in a semi-liquid state and a catalyst in a liquid state; c) allowing the silicone and catalyst mixture to solidify at room temperature until obtaining a second mould comprising a plurality of projections in correspondence with the first holes of the base mould and demoulding said second mould from the base mould.

## Description

### OBJECT OF THE INVENTION

The present invention relates to the technical field of obtaining devices for analysing samples from histopathological studies and, in particular, to a new method for manufacturing moulds for obtaining TMAs (Tissue Microarrays).

The method is based on the 3D printing a base mould, from which a second silicone mould is obtained, with which the paraffin block for TMA is obtained.

### TECHNICAL PROBLEM TO BE SOLVED AND BACKGROUND OF THE INVENTION

A TMA (Tissue Microarray) is a paraffin block in which multiple tissue cores are assembled in a plurality of holes distributed in an array of rows and columns. TMAs are used to allow numerous histological analyses of the tissues that are included in the paraffin block as core tissues.

Typically, a histological analysis consists of making 2-4 µm sections of whole individual tissue samples. When a multiple histological analysis is to be performed, TMAs can be used to analyse, with a single section, all the tissues included in the TMA under study. It reduces the number of reagents and materials necessary to perform the analysis and reduces the processing time and cost. Therefore, the use of TMAs today is widespread for the massive analysis of molecular/cellular biomarkers in oncology and other areas, such as in studies for drug development, toxicology, etc.

Currently, TMAs are manufactured using silicone moulds obtained from metallic base moulds. These silicone moulds are sold at very high prices and are standard; there is no possibility of customising them beyond the existing standard units. Thus, TMAs obtained from these moulds comprise a predetermined number of holes for tissue inclusion, and the holes have a predetermined diameter.

One reason current silicone moulds are so expensive is that the base moulds are metallic and manufactured with costly machines, tools, and methods (generally based on numerical control or spark erosion). The metallic moulds are obtained by means of machining operations and, from them, silicone moulds are obtained by applying a casting method.

Likewise, document RU193973U1, which describes a method for manufacturing paraffin blocks, is known from the state of the art. This document proposes replacing the machining of metallic base moulds with 3D printing, whereby obtaining a new base mould and subsequently using said base mould, a silicone box with a uniform and flat surface is obtained. If these silicone boxes were to be used to obtain TMAs, the tissue samples (preferably with a cylindrical configuration) would have to be arranged by hand, leaving the complex preparation of the piece of paraffin for TMA in the hands of the operator, embedding the tissue samples to be placed in the desired quantity, order (or disorder) and layout. The tissue samples, which, as described, are generally cylindrical, have a small diameter. These samples will not stand upright on their own in a fixed and organised manner if no additional elements hold them in their positions.

Thus, the most relevant technical problem of the method of said RU193973U1 is that if the silicone mould is to be used to obtain TMAs, starting from the said silicone mould, the samples are placed in it, and paraffin is later poured into form the TMA. If the tissue samples are not held in place in some way, they will shift. It is, therefore, an almost artisanal method, the success of which depends on the operator's skill. In addition, it requires a longer preparation time to ensure it is correctly carried out since it is necessary to avoid shifting the samples or to prevent them from falling. Errors of various types can occur throughout the method, such as modification of the distances between tissue samples, tilt of these samples with a cylindrical configuration in an undesired manner, breakage of the samples during the handling method, etc.

Another problem associated with document RU193973U1 is that the orientation in the silicone moulds obtained does not allow for identifying which sample corresponds to each tissue since there may be confusion when rotating the mould. In the method described in RU193973U1, the base mould obtained by 3D printing is filled with silicone by means of a jetting method, preferably from a two-component silicone elastomer polymerised in the base mould. The silicone jetting method requires jetting machinery, which has a high cost and electrical consumption and needs, for its operation, jetting parameters such as casting temperature, heating area, jetting pressure, closure force, jetting weight, cooling time, etc. These parameters affect the quality of the product. Furthermore, qualified personnel and safety measures are required when working at temperatures exceeding 60-80°C. Due to the jetting technique, specialised design programmes are necessary. The mould of document RU193973U1 is specially configured to be used for research by means of scanning electron microscopy and electron probe X-ray microanalysis, for which the inclusion of tissue samples in epoxy resin is described.

Another known state-of-the-art document is WO2007114535A1, which is part of the technical field of manufacturing TMAs. Said document proposes the manufacture of a liquid silicone rubber mould by means of jetting, for which the base mould with which the silicone rubber mould is obtained must be metallic and have an inverse shape. Furthermore, said base mould is manufactured using complex machinery and high temperatures. It also describes the possibility of using different conventional silicone moulding methods, such as silicone compression moulding, jetting moulding, extrusion moulding, coating moulding, etc. Once the silicone rubber mould is obtained, it is placed in a metallic container where the paraffin is poured, and a plastic covering and cutting device (or cassette, as it is commonly known in the sector) is placed on top before solidifying the paraffin. Thus, a drawback associated with the method it describes is that four elements are necessary to carry out the technique (metallic base mould from which the silicone mould is created, metallic container, silicone rubber mould and covering and cutting device).

Another known document from the state of the art also aimed at obtaining TMAs is WO2004111614A1, which describes a method that includes the manufacture of a recipient block by means of the use of an additive such as agarose or agar for obtaining a gel that is subsequently dehydrated in various alcohol solutions, immersed in xylene and to which paraffin is added. The resulting block is cut to the appropriate size and drilled to form the holes in which the tissues will be housed. Thus, a method for directly creating a paraffin block with a plurality of holes is described.

Likewise, document WO2008069502A1, which describes the method for manufacturing a recipient block comprising empty holes in which tissue samples are arranged and said container block is subsequently placed in a metallic mould, is known from the state of the art. Once positioned in the metallic mould, paraffin is poured to form the corresponding TMA with said paraffin and the tissue samples previously arranged in the holes of the container block. To prepare the recipient block, a previous mould that can be made of various materials such as polyethylene, polyurethane, polyimide, polyethylene terephthalate, poly(methyl methacrylate), polypropylene, polystyrene, polycarbonate, polyvinyl chloride, polyvinyl acetate, polyvinyl alcohol, acrylic resin, phenol resin, urea resin, silicon resin, epoxy resin, polyester resin, melamine resin, polycarbonate resin, fluoropolymer resin, cellulose resin and acetal resin.

### DESCRIPTION OF THE INVENTION

The purpose of the present invention is to solve current difficulties by means of developing a new method for manufacturing moulds to obtain TMAs which, in addition to being less expensive, allows greater flexibility, offering the possibility of modifying the number of holes in the block and the diameter of said holes depending on needs.

In particular, the method is based on using 3D printers to manufacture a base mould, from which a second mould is obtained from cold silicone. This reduces costs in terms of production, materials, and equipment necessary for the method.

Currently, many hospitals already have 3D printing equipment. In addition, the method described reduces the time required to adapt the moulds' shape, size, distribution of holes, etc., depending on clients' needs, allowing production by individual units.

Thus, the proposed method for manufacturing moulds for obtaining paraffin blocks for TMA includes the steps of:
a) obtaining a base mould by means of 3D printing;
b) filling the base mould with a mixture, at room temperature, of silicone in a semi-liquid state and a catalyst in a liquid state;
c) allowing the silicone and catalyst mixture to solidify at room temperature until obtaining a second mould;
d) demoulding the second mould from the base mould and filling said second mould with liquid paraffin, preferably at a temperature between 58 and 60°C;
e) allowing the paraffin poured into the second mould to solidify at room temperature; and
f) demoulding the paraffin block from the second mould to obtain a paraffin block with a plurality of holes, forming an array, intended to receive a plurality of tissue samples.

Step e) of allowing the poured paraffin to solidify at room temperature is preferably performed after having previously placed a covering and cutting device on top of the second mould when it is already filled with paraffin that has not yet solidified.

The covering and cutting device is what is usually known in the state of the art as a cassette and is configured as a cover, generally made of a plastic material, that is placed on the silicone mould after filling it with paraffin (before it solidifies) and forming the TMA so that the TMA can subsequently be handled and processed more efficiently. This type of device is commonly used in anatomical pathology laboratories since to use microtomes (which are devices used to cut samples from the TMA with a very slight thickness and obtain preparations that are then evaluated under a microscope), it is necessary to use covering and cutting devices to adjust the position of the samples.

To obtain the base mould by means of 3D printing, the following steps are preferably performed:
- digitally preparing a parametric CAD design of the base mould according to the requirements of the end user by selecting, based on same: the number of holes, the separation between them, the diameter/diameters of the holes, etc.;
- exporting the CAD design to a file suitable for processing by 3D printing;
- configuring a 3D printer given the file suitable for processing by 3D printing by selecting at least one parameter, where said parameter can be:
   - the size of the printer's extrusion nozzle (for example, 0.2 mm);
   - the material to be printed (in an exemplary embodiment, preferably PLA (polylactic acid));
   - printing speed, fill percentage, quality, layer height, etc.;
- printing the mould by means of a 3D printer.

Preferably, the step of applying silicone with a catalyst (step b)) is performed by mixing the silicone with the catalyst and incorporating said mixture into the base mould obtained in the previous step (step a)) by means of 3D printing.

Therefore, it is a very low-cost method that uses very economical materials, allowing the current cost of manufacturing moulds for obtaining TMAs to be reduced by 2 to 5 times.

Likewise, a method for obtaining a TMA is described, comprising the steps of:
i) obtaining a paraffin block for TMA as described above;
ii) inserting at least one tissue sample to be analysed into at least one hole of the array of the paraffin block to obtain a TMA.

The present invention provides the advantage that the silicone mould (second mould) does not need a metallic base mould to contain the paraffin since the silicone mould itself is made from the base mould that is 3D printed and designed with walls having a preferred thickness between 2 mm and 5 mm (although not limited to these thicknesses), which act as a container to pour the liquid paraffin. In this way, silicone consumption is reduced compared to prior art solutions in which moulds have walls with a width greater than 5 mm and/or it is necessary to use metallic moulds to contain the paraffin.

Other advantages of the present invention are that obtaining the base mould requires only a 3D printer and that the silicone mould can be manufactured with cold silicones, thus reducing costs to a minimum and starting a new path of application at a low cost and with almost no need for installations.

Additionally, to avoid confusion in the inclusion of the tissue samples in the paraffin block to obtain the TMA, the proposed method may comprise a step of creating a notch in the paraffin block that allows the position of each of the holes in the paraffin block and therefore, subsequently, of the tissue samples when they are introduced into said holes, to be identified at all times. In another exemplary embodiment, the method comprises, in step a), preparing an asymmetric design for obtaining an asymmetric base mould (and, therefore, an asymmetric second mould and an asymmetric paraffin block).

Thus, in an exemplary embodiment, the method may comprise, after step a) and before step b), a step of making a notch in the base mould obtained by means of 3D printing. In another exemplary embodiment, an asymmetric base mould can be designed, for example, by omitting one of the holes in one of the corners of the array.

Another advantage associated with the present invention is that it allows the use of any 3D printing technology (FFF, Fused Deposition Modelling; SLA, Stereolithography; DLP, Digital Light Processing; SLM, Selective Laser Fusion; MJ, Material Jetting; BJ, Binder Jetting), unlike prior art solutions that only use a filament (ABS or PLA) 3D printer.

Furthermore, unlike some of the previously described prior art methods, in which the samples are placed and the paraffin is subsequently poured, the method proposed in the present invention allows the paraffin block with empty holes to be created first and then the tissue samples to be introduced into said holes, which completely reverses the method for introducing the tissue samples into the paraffin, reducing the possibility of breakage and error, as described above. Likewise, there is no possibility of the tissue samples moving and becoming disordered, always being structured identically according to the design made with 3D printing.

Another advantage of the present invention is that a paraffin block is manufactured with a plurality of holes arranged in the form of an array, with a flexible design (adaptable to the needs of the user who designs it), where it is easy to place the samples in the holes which are designed with a shape and size adapted to the configuration of the TMA tissue samples to be obtained (generally with a cylindrical configuration). The base mould is manufactured based on a precise CAD design that can be parametrised with regular and pre-set dimensions. Subsequently, the second mould is obtained, from which completely identical copies of paraffin blocks are obtained.

Likewise, with the present invention, the silicone to obtain the second mould can be arranged in the base mould by means of a casting process. It increases manufacturing flexibility compared to silicone jetting methods, in which mould changes, adjustments to jetting parameters, etc., are necessary, which also increases costs.

In an exemplary embodiment, silicone casting is performed at room temperature and without machinery, simply mixing the silicone and the catalyst and pouring them into the base mould (the mould made by 3D printing). This is a simple method that does not require qualified personnel.

### DETAILED DESCRIPTION

The present invention should not be limited by the embodiment herein described. Other arrangements may be carried out by those skilled in the art based on the present description. Accordingly, the scope of the invention is defined by the following claims.

The present invention describes a method for manufacturing moulds for manufacturing paraffin blocks for TMA comprising at least the steps of:
a) obtaining a base mould by means of 3D printing where said base mould comprises a certain number of first holes, forming an array;
b) filling the base mould with a mixture, at room temperature, of silicone in a semi-liquid state and a catalyst in a liquid state;
c) allowing the silicone and catalyst mixture to solidify at room temperature until obtaining a second mould comprising a plurality of projections in correspondence with the first holes of the base mould and demoulding said second mould from the base mould.

The first holes are holes by means of which a plurality of projections are formed in the second mould, by means of which a plurality of holes are formed in turn in the paraffin block.

Preferably, the second mould comprises walls between 2 mm and 5 mm.

Also preferably, step a) comprises the following sub-steps:
- preparing a parametric CAD design of the base mould according to the requirements of the end user;
- exporting the CAD design to a file suitable for processing by 3D printing;
- configuring a 3D printer based on the file suitable for processing by 3D printing;
- printing the base mould by means of a 3D printer.

To avoid possible errors in the positioning of the tissue samples, the base mould, the second mould and the paraffin block, should have an asymmetric distribution of the holes. To this end, the base mould comprises a plurality of holes by means of which a plurality of projections are formed in the second mould, by means of which a plurality of holes are formed in turn in the paraffin block, and the distribution of holes in the base mould, and therefore in the paraffin block, is asymmetrical.

Thus, in an exemplary embodiment, the first holes of the base mould are distributed forming an asymmetric array. It avoids possible confusion regarding the location of the samples in the TMA, as the asymmetry of the base mould allows each of the positions to be referenced more easily and clearly.

Another option to achieve asymmetry in the base mould is to make a notch in the base mould obtained by means of 3D printing after step a) and before step b).

A method for obtaining a paraffin block for TMA is also described, comprising the steps of:
i) filling a second silicone mould as described above with liquid paraffin;
ii) allowing the paraffin poured into the second mould to solidify at room temperature; and
iii) demoulding the paraffin block from the second silicone mould, obtaining a paraffin block for TMA.

The paraffin block for TMA comprises a plurality of holes, forming an array intended to receive a plurality of tissue samples.

Preferably, in step i) of said method, the paraffin is poured at a temperature of between 58 and 60°C.

In an exemplary embodiment, the step prior to step ii) comprises placing a covering and cutting device on the second mould after pouring the paraffin and maintaining said covering and cutting device in its position during the paraffin's solidification.

Likewise, a method for obtaining a TMA is described, comprising the steps of:
i) obtaining a paraffin block for TMA according to the method described above;
ii) inserting at least one tissue sample to be analysed into at least one hole of the array of the paraffin block to obtain a TMA.

## Claims

1. A method for manufacturing moulds for manufacturing paraffin blocks for TMA comprising at least the steps of:
a) obtaining a base mould by means of 3D printing where said base mould comprises a certain number of first holes, forming an array;
b) filling the base mould with a mixture, at room temperature, of silicone in a semi-liquid state and a catalyst in a liquid state;
c) allowing the silicone and catalyst mixture to solidify at room temperature until obtaining a second mould comprising a plurality of projections in correspondence with the first holes of the base mould and demoulding said second mould from the base mould.

2. The method according to claim 1, wherein the second mould comprises walls between 2 mm and 5 mm.

3. The method according to any one of the preceding claims, wherein step a) comprises the following sub-steps:
- preparing a parametric CAD design of the base mould according to the requirements of the end user;
- exporting the CAD design to a file suitable for processing by 3D printing;
- configuring a 3D printer based on the file suitable for processing by 3D printing;
- printing the base mould by means of a 3D printer.

4. The method according to any one of the preceding claims, wherein the first holes of the base mould are distributed forming an asymmetric array.

5. The method according to any one of claims 1 to 3, wherein after step a) and before step b), it comprises a step of making a notch in the base mould obtained by means of 3D printing.
